(19) Europäisches Patentamt

European Patent Office

Office européen des brevets

(11) **EP 2 232 343 B1**

(12) **EUROPEAN PATENT SPECIFICATION**

(45) Date of publication and mention
of the grant of the patent:
**11.10.2017 Bulletin 2017/41**

(21) Application number: **08865302.7**

(22) Date of filing: **22.12.2008**

(51) Int Cl.:
*F03D 7/02* *(2006.01)*      *F03D 7/04* *(2006.01)*
*G05B 13/02* *(2006.01)*

(86) International application number:
**PCT/DK2008/000448**

(87) International publication number:
**WO 2009/080036 (02.07.2009 Gazette 2009/27)**

(54) **A METHOD FOR CONTROLLING A COMMON OUTPUT FROM AT LEAST TWO WIND TURBINES, A CENTRAL WIND TURBINE CONTROL SYSTEM, A WIND PARK AND A CLUSTER OF WIND PARKS**

VERFAHREN ZUR STEUERUNG EINER GEMEINSAMEN AUSGABE VON MINDESTENS ZWEI WINDTURBINEN, ZENTRALES WINDTURBINENSTEUERSYSTEM, WINDPARK UND CLUSTER VON WINDPARKS

PROCÉDÉ DE COMMANDE D'UNE SORTIE COMMUNE D'AU MOINS DEUX ÉOLIENNES, SYSTÈME DE COMMANDE CENTRALE D'ÉOLIENNES, PARC ÉOLIEN ET GROUPE DE PARCS ÉOLIENS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 DK 200701871**
**20.12.2007 US 15451**

(43) Date of publication of application:
**29.09.2010 Bulletin 2010/39**

(73) Proprietor: **Vestas Wind Systems A/S**
**8200 Aarhus N (DK)**

(72) Inventors:
• **KJÆR, Philip Richard Jacobsen Carne**
**DK-8000 Århus C (DK)**

• **GARCIA, Jorge Martinez**
**41930 Bormujos**
**Sevilla (ES)**

(56) References cited:
**EP-A- 1 790 851**

• **NAYEEM RAHMAT ULLAH ET AL: "Reactive Power Ancillary Service from Wind Farms" ELECTRICAL POWER CONFERENCE, 2007. EPC 2007. IEEE CANADA, IEEE, PISCATAWAY, NJ, USA, 25 October 2007 (2007-10-25), pages 562-567, XP031252765 ISBN: 978-1-4244-1444-4**

**Description**

**Background of the invention**

The invention relates to a method for controlling a common output from at least two wind turbines. Furthermore the invention relates to a central wind turbine control system, a wind park and a cluster of wind turbines.

**Description of the Related Art**

Wind parks comprising multiple wind turbines are often used to support the stability of the utility grid, both by complying with the grid codes set up, but also by being considered as one consolidated and adjustable power plant that controllable supply the utility grid with e.g. active current, reactive current, etc. The utility grid operator thereby has the possibility of enhancing the stability and efficiency of the utility grid.

Within the wind park the turbines are controlled by a wind park control system. The European patent application EP1790851 describes a method for controlling a wind park comprising a central processing and control unit coupled to the wind turbines. Data is received from at least one upstream wind turbine to predict load impact on downstream wind turbines thereof. Furthermore control signals are transmitted to either reduce power of downstream turbines or reduce speed of upstream wind turbines.

A problem with the described prior art is that the control strategy only take into account reducing stress on rows of wind turbines by reducing speed or power.

It is an object of the present invention to provide an advantageous method for controlling operational values of a common output of at least two wind turbines.

**The invention**

The invention relates to a method for controlling a common output from at least two wind turbines comprising the steps of:

- receiving at a central wind turbine control system

    - at least one set point value of a set point parameter from a utility grid operator, and

    - at least one operational value of a operational parameter from at least one of said wind turbines,

- establishing a cost function equation comprising at least one function variable reflecting an operational parameter of said wind turbines and said received set point parameter,

- solving the cost function equation with respect to said at least one function variable to find an extremum for said cost function,

- calculating weighted operational parameter set points for each of said wind turbines from the obtained solution, and

- controlling at least one of said wind turbines in relation to said weighted operational parameter set points.

By the term common output is meant the summarized output produced by said at least two wind turbines and injected to a grid such as a utility grid in a common point such as a point of common connection PCC.

By the term weighted operational parameter set points is meant individual control values for each of said wind turbines, said control values may or may not be identical values.

By the invention it is ensured that differentiated control set points i.e. weighted control set points for an arbitrary operational parameter, can be distributed to different individual wind turbines in a wind turbine cluster, with the effect that each of said wind turbines can operate at different set points for the same operational parameter.

It is hereby ensured that a set point value received from a grid operator can be distributed to each or some of the wind turbines in the cluster, for the wind turbines to each produce a part of the requested value, and that the part for each wind turbine to produce is weighted according to an optimized cost function giving the optimal distribution.

It is further achieved that the summarized output from said at least two wind turbines in said common output is remained at the received set point level even though the at least two wind turbines in not producing the same output.

It is also ensured that, dependent of various parameters, each individual wind turbine can contribute to the production of an overall output demand, with different partial contributions.

In a first embodiment of the invention, sum of the set of said weighted operational parameter set points is substantial equal to said set point value of a set point parameter from a utility grid operator. It is hereby ensured that the common output of the influenced wind turbines in relation to the operational parameter is substantial equal to a set point value of the same operational parameter as received from a utility grid operator.

In one preferred embodiment of the first embodiment, said set point parameter is reactive current. Hereby it is ensured that the said cost function can be optimized e.g. in relation to minimizing the loss in power in transmission cables e.g. within a wind park, due to reactive current produced by the wind turbines. As an example if the wind turbines connected to the transmission net within the wind park, which have the longest transmission lines to a PCC, is set to produce quantified less reactive current than the wind turbines closer to PCC, the wind park as a whole will produce the required reactive current as set by the grid operator, but the power loss in the transmission cables is minimized e.g. compared to if all wind turbines is set to produce the same amount of reactive current.

In a further aspect of the invention, said cost function equation is solved by last square optimization. By solving the cost function by a last square optimization it is ensured that a well known reliable optimization method is used and a method that does not require excessive computational means.

In another aspect of the invention said central wind turbine control system further receives at least one environmental condition value of an environmental condition parameter and said cost function equation further comprises at least one function variable reflecting said environmental condition parameter. For various embodiments of this aspect, said environmental condition parameters can be e.g. time, park configuration, air temperature, air humidity, wind conditions etc. It is hereby ensured that the central wind turbine control system can distribute weighted control signals to the individual wind turbines, taking into account said environmental condition values and optimize the individual contributions from the wind turbines to the common output accordingly. It is further ensured that if e.g. one wind turbine due to some reason is sensitive to increased wind speeds, the central wind turbine control system can decrease the output from this wind turbine to protect the turbine from break down, while increasing the output of the other connected wind turbines slightly, still achieving the same common output.

In yet another aspect of the invention, said central wind turbine control system further receives at least one utility grid value of a utility grid parameter at PCC and said cost function equation further comprises at least one function variable reflecting said utility grid parameter. For various embodiments of this aspect, said utility grid parameter can be e.g. voltage, active current, reactive current, active power, reactive power, frequency, $\cos(\varphi)$, power quality etc. Hereby it is ensured that the common output of said wind turbines is obtained according to e.g. set-points received from an grid operator. Furthermore it is ensured that said central wind turbine control system can monitor changes at PCC and, if desired, individually control the said wind turbines accordingly.

In another aspect of the invention, said central wind turbine control system further receives at least one forecast value of a forecast parameter and said cost function equation further comprises at least one function variable reflecting said forecast parameter. For embodiments of the invention, said forecast values can be e.g. weather forecast values. Hereby the control of the connected wind turbines can be predicted by the central wind turbine control system and the individual wind turbine can be operated accordingly.

In a further aspect of the invention, said cost function further comprises at least one function variable reflecting stored data from at least one look-up table. Hereby it is ensured that data such as previously obtained wind turbine data, grid data, environmental data, experimental data etc. can be used in solving the cost function equation.

In another aspect of the invention, said cost function equation is solved substantially continuously during operation of said at least two wind turbines. Hereby it is ensured that the cost function equation is always up to date and that the influenced wind turbines are always updated by optimized set-points are always operating with optimal individual settings even substantially immediately after sudden changes in operational conditions.

Other aspects of the invention are related to a central wind turbine control system, a wind park and a cluster of wind parks.

**Figures**

The invention will be described in the following with reference to the figures in which

fig. 1.    illustrates a large modern operating wind turbine known in the art, as seen from the front,

fig. 2    illustrates schematically a wind park comprising a plurality of wind turbines 1 according to one embodiment of known art,

fig. 3    illustrates schematically an embodiment of the present invention for a wind park comprising a plurality of wind turbines 1,

fig. 4a    illustrates schematically as an explanatory example, a wind park known in the art, comprising five wind turbines T1 to T5

fig. 4b    illustrates schematically as an explanatory example, a wind park according to one embodiment of the invention comprising five wind turbines T1 to T5

**Description of known art**

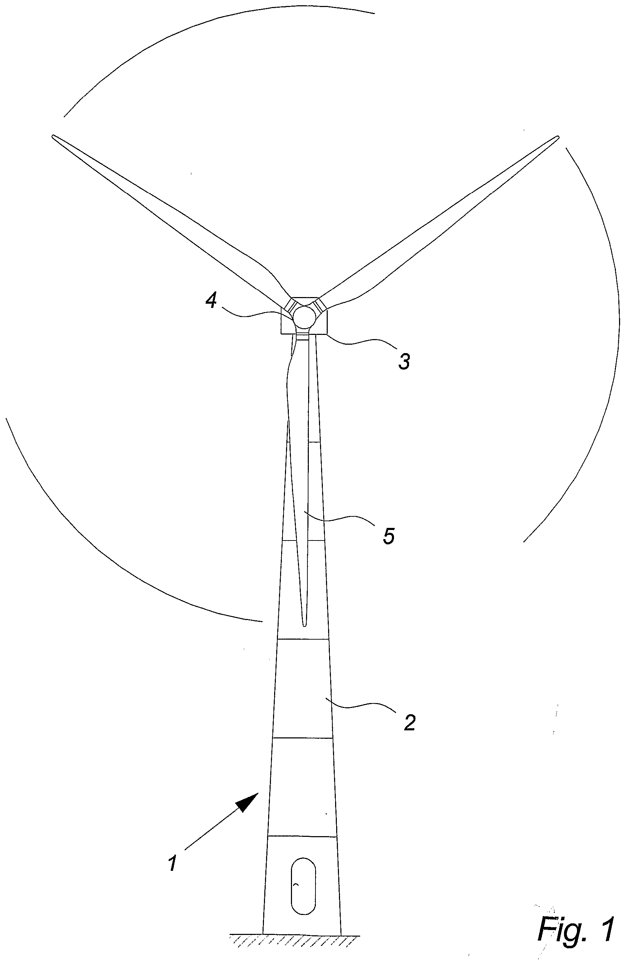

Fig. 1 illustrates a modem operating wind turbine 1, comprising a tower 2 and a wind turbine nacelle 3 positioned on top of the tower 2. The wind turbine rotor 4, comprising three wind turbine blades 5, is connected to the nacelle 3 through the low speed shaft which extends out of the nacelle 3 front.

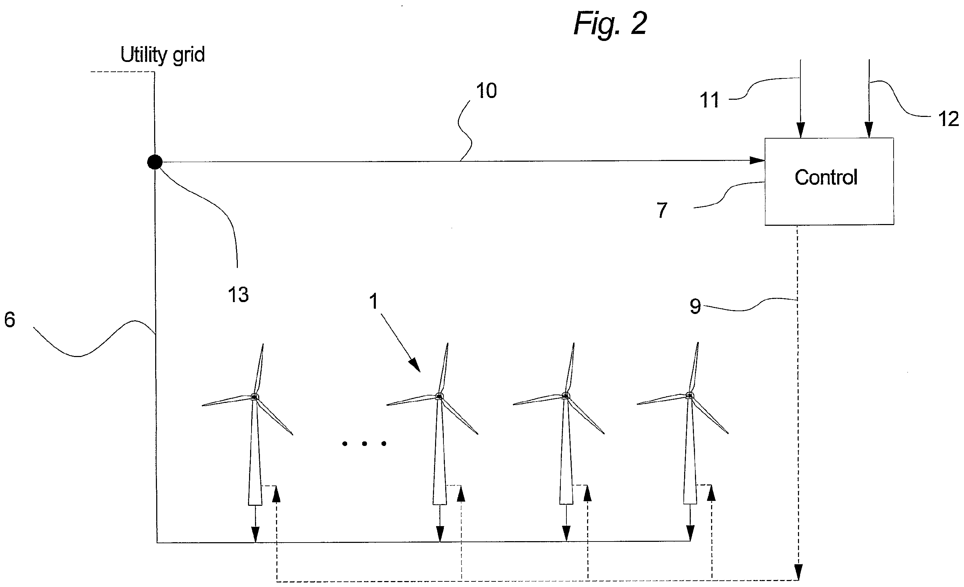

Fig. 2 illustrates schematically a plurality of connected wind turbines 1 according to one embodiment of known art. The wind turbines 1 inject energy to the utility grid at a common supply connection often called the point of common connection (PCC) 13 via an interconnected power grid common to the wind turbines 6.

For one embodiment of the invention, said plurality of connected wind turbines comprises at least two wind turbines and may be regarded as a wind park.

For various embodiments of known art a central control unit 7 receives set point values 12 e.g. from a utility grid operator and/or receives environmental data 11 such as wind speed, temperature, air humidity etc. from e.g. measuring means or other sources.

Furthermore the control unit 7 may receive feedback values 10 representative of values of the utility grid and/or actual connected wind turbines, said values comprise active power, reactive power, voltage, frequency, phase angle etc.

On the basis of the received information the control unit 7 process collective set point commands to the wind turbines 1 and distributes the values of said collective set points to each of the connected wind turbines 1 via a collective wind turbine data connection.

**Detailed description of the invention**

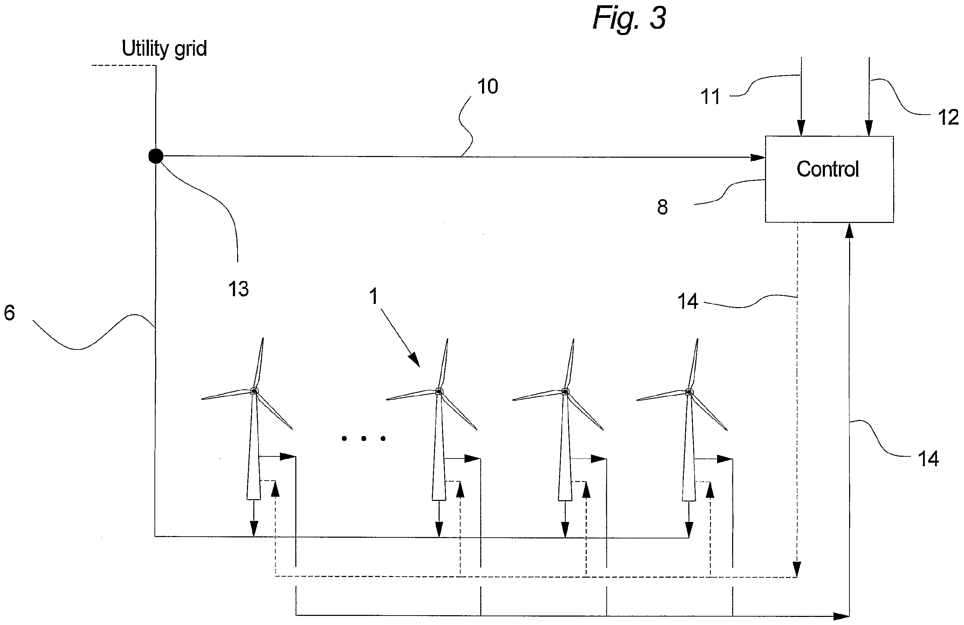

Fig. 3 illustrates schematically an embodiment of the present invention for a plurality of connected wind turbines 1. The wind turbines 1 inject energy to the utility grid at PCC 13 via an interconnected power grid common to the wind turbines 6.

A central wind turbine control system 8 receives at least one control parameter such as one or more set point values 12 from a utility grid operator.

Each individual connected wind turbine 1 is connected to the central wind turbine control system 8 via data connections 14 for distribution of data between the control system 8 and individual wind turbines 1. For one embodiment of the invention, said data connections 14 is an integrated SCADA system and for other embodiments of the invention said data connections are separate data connections for transmitting and receiving data to and from the individual wind turbines respectively.

According to various embodiments of the invention, the central wind turbine control system 8 calculates individual set point values of the wind turbines 1 on the basis of said received at least one control parameter such as one or more set point values 12 from a utility grid operator.

In other embodiments of the invention, the control system 8 receives feedback values 10 representative values of the utility grid and/or the common output of at least two wind turbines, said values 10 comprise active power, reactive power, frequency, voltage, phase angle etc.

For further embodiments the control system 8 receives at least one operational value from at least one of said wind turbines.

The values are used in the calculation of individual control values of the wind turbines 1.

In further embodiments of the invention, the control system 8 further receives environmental data 11 such as wind speed, temperature, air humidity etc. from e.g. measuring means or other sources. The values 10 are used in the calculation of individual control values of the wind turbines 1.

Said individual set point values of the wind turbines 1 are weighted values emerged from a data processing process and calculation of said central wind turbine control system 8.

For various embodiments of the invention, based on received data (set point from grid operator, operational value from wind turbines, feedback values of the utility grid and/or the common output and/or environmental data) the control system 8 generates a set of weighted control values for the individual wind turbines. The weighted control values control the wind turbine accordingly.

For various embodiments the weighted set point values are not equivalent for one or more of the wind turbines.

For various embodiments the weighted set point values are the product of a multiplication of more than one weighted sub control values.

For various embodiments of the invention, the weight factors can be fixed in time e.g. to compensate for stationary parameters such calibration variations, variations in wind turbine nameplate ratings etc. or the weight factors can be variable to compensate for dynamical parameter such as wind turbine component temperatures, generated voltages, frequency, disconnected turbines, day/night settings, lifetime wear etc.

For one preferred embodiment of the invention, the weight factors is fixed in time to compensate for cable losses in the grid cabling between the individual wind turbines, or between the individual wind turbine and e.g. a point of common connection (PCC).

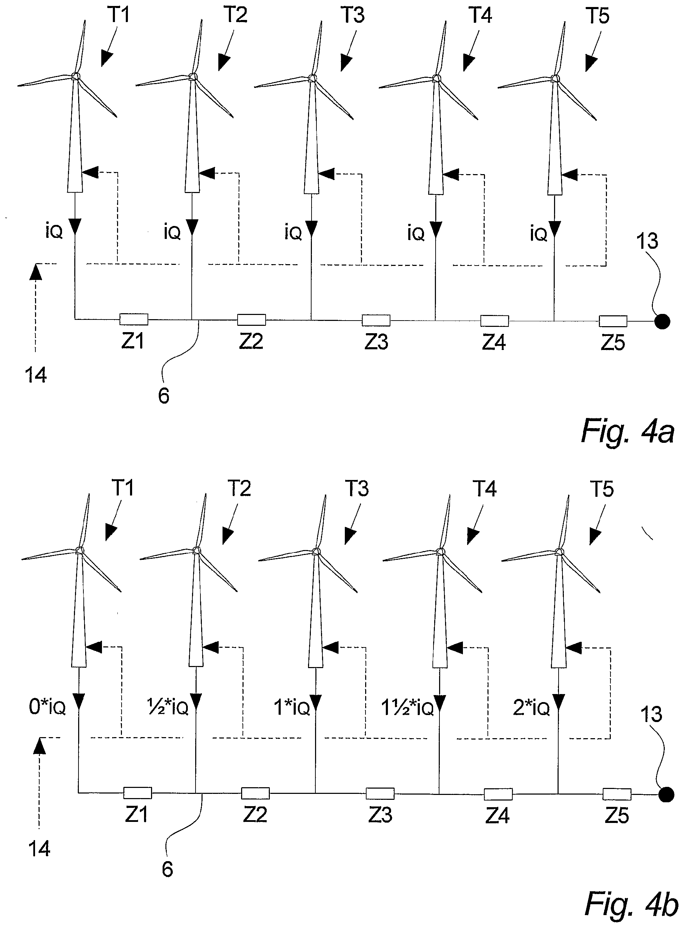

Fig. 4a and 4b illustrates one example of known art and one example of individual weighted reactive power set point values for a plurality of connected wind turbines for the purpose of reducing power losses in power cables.

Fig. 4a illustrates schematically as an explanatory example, connected wind turbines known in the art, comprising five wind turbines T1 to T5. The wind turbines inject energy to a utility grid at some PCC 13 via a power grid internal to the wind turbines 6 as previously described e.g. in figure 2.

According to known art a central control unit 7 distributes a collective set point value of e.g. reactive power to each of the connected wind turbines 1 via a collective wind turbine data connection 14 to which the wind turbine settles its reactive power production. The current that is injected by each wind turbine is substantially equal i.e. for the present example an arbitrary value $i_Q$, as indicated on the figure. The total amount of $i_Q$ injected from the connected wind turbines in the PCC is therefore $5 * i_Q$.

The cabling of the interconnected power grid of the wind turbines for this illustrative example, e.g. between the wind turbines T1 to T5 and from the wind turbine T5 to the PCC, comprises cable impedances Z1-Z5 as shown in the figure.

Consequently the power loss due to reactive current that flows thru the impedances is proportional to:

$$P_{Qloss} = i_Q^2 * (1*Z1 + 2*Z2 + 3*Z3 + 4*Z4 + 5*Z5)$$

Assuming that Z1 = Z2 ... = Z5 = Z, this lead to:

$$P_{Qloss} = i_Q^2 * 15*Z$$

Fig. 4b illustrates schematically as an explanatory example, according to one preferred embodiment of the invention, connected wind turbines comprising five wind turbines T1 to T5. A central wind turbine control system 8 distribute individual weighted set point values of e.g. reactive power to each of the connected wind turbines T1 to T5 via a wind turbine data connection 14. The individual wind turbines settle its reactive power production accordingly.

For one embodiment the said individual set point values are weighted in order to reduce the power loss due to reactive current that flows thru the impedances Z1 to Z5.

For this example the factors of said weighting are:

| Wind turbine: | Set point value without weight factors: | Weight factor: | Set point value with weight factor: |
|---|---|---|---|
| T1 | $1 * i_Q$ | 0 | 0 |
| T2 | $1 * i_Q$ | 0,5 | $0,5 * i_Q$ |
| T3 | $1 * i_Q$ | 1 | $i_Q$ |
| T4 | $1 * i_Q$ | 1,5 | $1,5 * i_Q$ |
| T5 | $1 * i_Q$ | 2 | $2 * i_Q$ |
| Total: | $5 * i_Q$ | | $5 * i_Q$ |

It can be seen that the total amount of $i_Q$ injected is unchanged i.e. $5*i_Q$, so the same response is achieved at PCC in both cases.

The cabling of the power grid internal to the wind turbines 6 e.g. between the wind turbines T1 to T5 and from the wind turbine T5 to the PCC comprises cable impedances Z1-Z5 as shown in figure 4b.

Consequently according to the example the power loss due to reactive current that flows thru the impedances is proportional to:

$$P_{Qloss} = i_Q^2 * (0*Z1 + 0,5*Z2 + 1,5*Z3 + 3*Z4 + 5*Z5)$$

As in the previous example of known art assuming that Z1 = Z2 ... = Z5 = Z, this lead to:

$$P_{Qloss} = i_Q{}^2 * 10*Z$$

Hereby a considerable loss of energy due to reactive power loss has been avoided.

For various embodiments of the invention, the assumptions made in the example of fig. 4a and 4b where Z1 = Z2 ... = Z5 = Z are not valid and must be replaced by knowledge about actual cable impedances. Furthermore arbitrary values must be replaced by actual values.

For further embodiments of the invention related to the minimization of reactive power loss due to cabling, said cabling comprises cabling between e.g. groups or rows of wind turbines, wind parks, clusters of wind parks or other defined cabling paths of wind turbines etc.

In another explanatory example of one embodiment of the invention, a plurality of connected wind turbines comprises five wind turbines T1 to T5. A central wind turbine control system 8 distribute individual weighted set point values of e.g. active power to each of the connected wind turbines T1 to T5 via a wind turbine data connection 14. The individual wind turbines settle its active power production accordingly.

For this example the said individual set point values are weighted in order to minimize the temperature of e.g. the converter of wind turbine T1 by e.g. reducing the active power production of T1, as a reduction in temperature is achieved by reducing the apparent wind turbine current, which can be active or reactive power or both. For active power regulation, when the weight factor calculated is higher than 1, a storage system is needed.

For this example the factors of said weighting are:

| Wind turbine: | Set point value without weight factors: | Weight factor: | Set point value with weight factor: |
|---|---|---|---|
| T1 | 1 * P | 0,8 | 0,8 * P |
| T2 | 1 * P | 1,05 | 1,05 * P |
| T3 | 1 * P | 1,05 | 1,05 * P |
| T4 | 1 * P | 1,05 | 1,05 * P |
| T5 | 1 * P | 1,05 | 1,05 * P |
| Total: | 5 * P | | 5 * P |

As can be seen the total produced active power for connected wind turbines will remain unchanged i.e. 5 * P but the individual contribution from each wind turbine is altered. The set point value for T1 is reduced as to reduce the temperature of the converter and the set point values for the remaining connected wind turbines are increased as to compensate therefore.

A further example of an embodiment of the invention is to equalize the voltage drop along the cables i.e. voltage drop across impedances Z1 to Z5 in the above described example, by weighting the active power set point values, and hereby the output, to the wind turbines.

An even further example of an embodiment of the invention is to maintain the same apparent power in all wind turbines during operation by dynamically weighting reactive power set point values.

Yet another example of an embodiment of the present invention is to control the frequency by altering active power through weighted set point values from the central wind turbine control system.

According to various embodiments of the invention, the central wind turbine control system 8 receives at least one operational value from at least one of the connected wind turbines, said value can be representative of e.g. injected active power, injected reactive power, voltage level, frequency, cable data such as impedances, temperature data from wind turbine components, torque or stress, wind turbine capacity, reserve power, reserve voltage, $\frac{dP}{dt}$ capacity, $\frac{dQ}{dt}$ capacity, power quality etc.

Furthermore, according to the invention, the central wind turbine control system 8 receives at least one set point value from a utility grid operator. Said value can be representative of e.g. reactive power level, active power level, voltage, frequency etc.

For one further embodiment of the invention, the central wind turbine control system 8 further receives at least one value of the utility grid measured at PCC. Said value can be representative of e.g. voltage, active current, reactive current, active power, reactive power, frequency, cos($\varphi$), power quality etc.

In an even further embodiment of the invention, the central wind turbine control system 8 further receives environmental condition values such as time, park configuration, air temperature, air humidity, values of wind conditions etc.

According to the invention, said weighted control values are derived from an optimal solution of one or more cost function optimization problems, modelled and processed in the central wind turbine control system 8.

In general the term cost function optimization refers to the field of minimizing or maximizing a mathematical function (equation) by choosing the best available values for function-variables from an allowed set of values, i.e. to find the best solution to a given outlined system being modelled.

According to one embodiment, said minimizing or maximizing a mathematical function is known from elementary calculus as to:

1. Differentiate the cost function equation with respect to the free variables
2. Equate the results with zero, and
3. Solve the resulting equations.

As for the example described in fig. 4b regarding minimizing of loss in cabling within a wind park comprising five wind turbines (T1...T5), a cost function comprising a set of equations can be constructed e.g. as:

$$
\begin{aligned}
\text{Loss} = \ & \left(\text{Id}_1^2 + \text{Iq}_1^2\right)\left(Z1 + Z2 + Z3 + Z4 + Z5\right) + \\
& \left(\text{Id}_1^2 + \text{Iq}_1^2 + \text{Id}_2^2 + \text{Iq}_2^2\right)\left(Z2 + Z3 + Z4 + Z5\right) + \\
& \left(\text{Id}_1^2 + \text{Iq}_1^2 + \text{Id}_2^2 + \text{Iq}_2^2 + \text{Id}_3^2 + \text{Iq}_3^2\right)\left(Z3 + Z4 + Z5\right) + \\
& \left(\text{Id}_1^2 + \text{Iq}_1^2 + \text{Id}_2^2 + \text{Iq}_2^2 + \text{Id}_3^2 + \text{Iq}_3^2 + \text{Id}_4^2 + \text{Iq}_4^2\right)\left(Z4 + Z5\right) + \\
& \left(\text{Id}_1^2 + \text{Iq}_1^2 + \text{Id}_2^2 + \text{Iq}_2^2 + +\text{Id}_3^2 + \text{Iq}_3^2 + \text{Id}_4^2 + \text{Iq}_5^2 + \text{Id}_5^2 + \text{Iq}_5^2\right) \cdot Z5
\end{aligned}
$$

and

$$\text{Iq}_1^2 \leq \text{In}_1^2 - \text{Id}_1^2$$

$$\text{Iq}_2^2 \leq \text{In}_2^2 - \text{Id}_2^2$$

$$\text{Iq}_3^2 \leq \text{In}_3^2 - \text{Id}_3^2$$

$$\text{Iq}_4^2 \leq \text{In}_4^2 - \text{Id}_4^2$$

$$\text{Iq}_5^2 \leq \text{In}_5^2 - \text{Id}_5^2$$

$$\left|\text{Iq}_1\right| + \left|\text{Iq}_2\right| + \left|\text{Iq}_3\right| + \left|\text{Iq}_4\right| + \left|\text{Iq}_5\right| = \left|\text{Iq}_{\text{total}}\right|$$

where:

$Z1$ = is the impedance of cable connecting wind turbine T1 to wind turbine T2
$\text{In}_n$ = Rated current of wins turbine Tn
$\text{Iq}_n$ = Quadrature component of wind turbine Tn (reactive power)
$\text{Id}_n$ = Direct component of wind turbine Tn (active power)
$\text{Iq}_{\text{total}}$ = Total quadrature current needed at PCC

The task is, according to the invention, to solve the cost function equation with respect to said at least one function variable to find an extremum for said cost function, to calculate weighted operational parameter set points for each of said wind turbines from the obtained solution, and further to control at least one of said wind turbines in relation to said weighted operational parameter set points.

For various embodiments, said cost function optimization is based on e.g. a least square optimization.

For further embodiments the said cost function optimization comprises processing stored values of one or more of the connected wind turbine.

For embodiments of the invention where said weighted control values are derived from an optimal solution of one or more cost function optimization problems, said central wind turbine control system 8 comprises means for processing the mathematical operations to achieve this.

For one embodiment of the invention, the central wind turbine control system 8 comprises means to store and process operational data such as scheduled service for one or more of the connected wind turbine. For this embodiment the central wind turbine control system on a scheduled basis alter said weighted control values to the remaining operational connected wind turbines to compensate for the one or more wind turbines undergoing service.

**List**

1. Wind turbine
2. Tower
3. Nacelle
4. Rotor
5. Blade
6. Power grid common to the wind turbines
7. Central control unit
8. Central wind turbine control system according to the invention
9. Collective wind turbine control data connection
10 Feedback values representative of values of the utility grid and/or actual common output from at least two wind turbines
11 Environmental data
12 Set point values from a utility grid operator
13 Point of Common Connection (PCC)
14 Data connections

**Claims**

1. A method for controlling a common output from at least two wind turbines comprising the steps of:

   - receiving at a central wind turbine control system

      - at least one set point value of a set point parameter from a utility grid operator, and
      - at least one operational value of a operational parameter from at least one of said wind turbines,

   - establishing a cost function equation comprising at least one function variable reflecting an operational parameter of said wind turbines and said received set point parameter,
   - solving the cost function equation with respect to said at least one function variable to find an extremum for said cost function,
   - calculating weighted operational parameter set points for each of said wind turbines from the obtained solution, and
   - controlling at least one of said wind turbines in relation to said weighted operational parameter set points.

2. A method according to claim 1, wherein the sum of the set of said weighted operational parameter set points is substantial equal to said set point value of a set point parameter from a utility grid operator.

3. A method according to claim 1 or 2, wherein said set point parameter is reactive current.

4. A method according to any of the preceding claims 1 to 3, wherein said cost function equation is solved by last square optimization.

5. A method according to any of the preceding claims 1 to 4, wherein said central wind turbine control system further receives at least one environmental condition value of an environmental condition parameter and said cost function equation further comprises at least one function variable reflecting said environmental condition parameter.

6. A method according to any of the preceding claims 1 to 5, wherein said central wind turbine control system further receives at least one utility grid value of a utility grid parameter at PCC and said cost function equation further comprises at least one function variable reflecting said utility grid parameter.

7. A method according to any of the preceding claims 1 to 6, wherein said central wind turbine control system further receives at least one forecast value of a forecast parameter and said cost function equation further comprises at least one function variable reflecting said forecast parameter.

8. A method according to any of the preceding claims 1 to 7, wherein said cost function further comprises at least one function variable reflecting stored data from at least one look-up table.

9. A method according to any of the preceding claims 1 to 8, wherein said cost function equation is solved substantially continuously during operation of said at least two wind turbines.

10. A central wind turbine control system comprising data-processing means suitable for performing the method according to any of claims 1 to 9.

11. A wind park comprising at least two or more wind turbines and a central wind turbine control system according to claim 10.

12. A cluster of wind parks comprising at least two wind parks according to claim 11.


**Patentansprüche**

1. Verfahren zum Steuern einer gemeinsamen Ausgabe von mindestens zwei Windkraftanlagen, das die folgenden Schritte umfasst:

   - Empfangen an einem zentralen Windkraftanlagensteuersystem
   - mindestens einen Sollwert eines Sollwertparameters von einem Energieversorgungsnetzbetreiber, und
   - mindestens einen Betriebswert eines Betriebsparameters von mindestens einer der Windkraftanlagen,
   - Bestimmen einer Kostenfunktionsgleichung, die mindestens eine Funktionsvariable umfasst, die einen Betriebsparameter der Windkraftanlagen und den empfangenen Sollwertparameter reflektiert,
   - Lösen der Kostenfunktionsgleichung in Bezug auf die mindestens eine Funktionsvariable, um ein Extremum der Kostenfunktion zu finden,
   - Berechnen gewichteter Betriebsparametersollwerte für jede der Windkraftanlagen aus der erhaltenen Lösung, und
   - Steuern von mindestens einer der Windkraftanlagen in Bezug auf die gewichteten Betriebsparametersollwerte.

2. Verfahren nach Anspruch 1, wobei die Summe der Menge von gewichteten Betriebsparametersollwerten im Wesentlichen gleich dem Sollwert eines Sollwertparameters von einem Energieversorgungsnetzbetreiber ist.

3. Verfahren nach Anspruch 1 oder 2, wobei der Sollwertparameter ein Blindstrom ist.

4. Verfahren nach einem der vorhergehenden Ansprüche 1 bis 3, wobei die Kostenfunktionsgleichung mittels der Methode der kleinsten Quadrate gelöst wird.

5. Verfahren nach einem der vorhergehenden Ansprüche 1 bis 4, wobei das zentrale Windkraftanlagensteuersystem weiterhin mindestens einen Umweltbedingungswert eines Umweltbedingungsparameters empfängt und die Kostenfunktionsgleichung weiterhin mindestens eine Funktionsvariable umfasst, die den Umweltbedingungsparameter reflektiert.

**6.** Verfahren nach einem der vorhergehenden Ansprüche 1 bis 5, wobei das zentrale Windkraftanlagensteuersystem weiterhin mindestens einen Energieversorgungsnetzwert eines Energieversorgungsnetzparameters bei PPC empfängt und die Kostenfunktionsgleichung weiterhin mindestens eine Funktionsvariable umfasst, die den Energieversorgungsnetzparameter reflektiert.

**7.** Verfahren nach einem der vorhergehenden Ansprüche 1 bis 6, wobei das zentrale Windkraftanlagensteuersystem weiterhin mindestens einen Vorhersagewert eines Vorhersageparameters empfängt und die Kostenfunktionsgleichung weiterhin mindestens eine Funktionsvariable umfasst, die den Vorhersageparameter reflektiert.

**8.** Verfahren nach einem der vorhergehenden Ansprüche 1 bis 7, wobei die Kostenfunktion weiterhin mindestens eine Funktionsvariable umfasst, die gespeicherte Daten aus mindestens einer Nachschlagetabelle reflektiert.

**9.** Verfahren nach einem der Ansprüche 1 bis 8, wobei die Kostenfunktionsgleichung im Wesentlichen kontinuierlich während des Betriebs der mindestens zwei Windkraftanlagen gelöst wird.

**10.** Zentrales Windkraftanlagensteuersystem umfassend Datenverarbeitungsmittel, die geeignet sind, das Verfahren nach einem der Ansprüche 1 bis 9 auszuführen.

**11.** Windpark umfassend mindestens zwei oder mehr Windkraftanlagen und ein zentrales Windkraftanlagensteuersystem nach Anspruch 10.

**12.** Gruppe von Windparks umfassend mindestens zwei Windparks nach Anspruch 11.


**Revendications**

**1.** Procédé de commande d'une sortie commune d'au moins deux éoliennes comprenant les étapes consistant à :

- recevoir au niveau d'un système de commande centrale d'éoliennes

- au moins une valeur de point de consigne d'un paramètre de point de consigne d'un opérateur de réseau de distribution, et
- au moins une valeur opérationnelle d'un paramètre opérationnel d'au moins une desdites éoliennes,

- établir une équation de fonction du coût comprenant au moins une variable de fonction reflétant un paramètre opérationnel desdites éoliennes et ledit paramètre de point de consigne reçu,
- résoudre l'équation de fonction du coût par rapport à ladite au moins une variable de fonction pour trouver un extremum pour ladite fonction du coût,
- calculer des points de consigne de paramètres opérationnels pondérés pour chacune desdites éoliennes à partir de la solution obtenue, et
- commander au moins une desdites éoliennes par rapport auxdits points de consignes de paramètres opérationnels pondérés.

**2.** Procédé selon la revendication 1, dans lequel la somme de l'ensemble des points de consignes de paramètres opérationnels pondérés est sensiblement égale à ladite valeur de point de consigne d'un paramètre de point de consigne d'un opérateur de réseau de distribution.

**3.** Procédé selon la revendication 1 ou 2, dans lequel ledit paramètre de point de consigne est un courant réactif.

**4.** Procédé selon l'une quelconque des revendications 1 à 3 précédentes, dans lequel ladite équation de fonction du coût est résolue par l'optimisation des moindres carrés.

**5.** Procédé selon l'une quelconque des revendications 1 à 4 précédentes, dans lequel ledit système de commande centrale d'éoliennes reçoit en outre au moins une valeur de condition environnementale d'un paramètre de condition environnementale et ladite équation de fonction du coût comprend au moins une variable de fonction reflétant ledit paramètre de condition environnementale.

**6.** Procédé selon l'une quelconque des revendications 1 à 5 précédentes, dans lequel ledit système de commande centrale d'éoliennes reçoit en outre au moins une valeur de réseau de distribution d'un paramètre de réseau de distribution au PCC et ladite équation de fonction du coût comprend en outre au moins une variable de fonction reflétant ledit paramètre de réseau de distribution.

7.  Procédé selon l'une quelconque des revendications 1 à 6 précédentes, dans lequel ledit système de commande centrale d'éoliennes reçoit en outre au moins une valeur prévisionnelle d'un paramètre prévisionnel et ladite équation de fonction du coût comprend en outre au moins une variable de fonction reflétant ledit paramètre prévisionnel.

8.  Procédé selon l'une quelconque des revendications 1 à 7 précédentes, dans lequel ladite fonction de coût comprend en outre au moins une variable de fonction reflétant les données stockées d'au moins une table de recherche.

9.  Procédé selon l'une quelconque des revendications 1 à 8 précédentes, dans lequel ladite équation de fonction du coût est résolue de manière sensiblement continue pendant le fonctionnement desdites au moins deux éoliennes.

10. Système de commande centrale d'éoliennes comprenant un moyen de traitement de données adapté pour mettre en oeuvre le procédé selon l'une quelconque des revendications 1 à 9.

11. Parc éolien comprenant au moins deux éoliennes ou plus et un système de commande centrale d'éoliennes selon la revendication 10.

12. Groupe de parcs éoliens comprenant au moins deux parcs éoliens selon la revendication 11.

*Fig. 1*

*Fig. 2*

EP 2 232 343 B1

Fig. 3

Utility grid

Control

*Fig. 4a*

*Fig. 4b*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1790851 A